# EUROPEAN PATENT SPECIFICATION

(11) **EP 0 820 073 B1**
(45) Date of publication and mention of the grant of the patent: **03.11.1999**
(21) Application number: 97201875.8
(22) Date of filing: 19.06.1997
(51) Int. Cl.: H01F 38/14

(54) **Inductive coupler assembly and having its primary winding formed in a printed wiring board**
Induktiver Kuppler und seine in eine gedruckte Leiterplatte angeordnete Primärwicklung
Coupleur inductif et son enroulement primaire formé dans une plaque à circuit imprimé

(30) Priority: 15.07.1996 US 679587
(43) Date of publication of application: 21.01.1998
(73) Proprietor: DELCO ELECTRONICS CORPORATION, Kokomo Indiana 46902 (US)
(72) Inventor: Woody, George R., Redondo Beach, California 90277 (US); Downer, Scott D., Torrance, California 90505 (US)
(74) Representative: Manitz, Finsterwald & Partner

(56) References cited:
- EP-A- 0 715 392
- US-A- 5 457 378
- PATENT ABSTRACTS OF JAPAN vol. 010, no. 082 (E-392), 2 April 1986 & JP 60 227406 A (NIHON ESU ESU AI KAADO KK), 12 November 1985,

## Description

### BACKGROUND

The present invention relates generally to inductive couplers, and more particularly, to an improved inductive coupler having a printed wiring board that forms a primary winding and antenna.

The assignee of the present invention designs and manufactures inductive charging systems for use in charging electric vehicles. The charging system employs a charge port into which an inductive coupler is inserted to charge the electric vehicle. The inductive coupler forms a primary winding of a transformer and the charge port forms a secondary winding of the transformer. The charging system couples high frequency, high voltage AC power to the transformer which charges propulsion batteries of the vehicle.

A prior primary winding developed for use in the inductive coupler had a manufacturing process that was complex, labor intensive, expensive, and prone to failures. An antenna portion of the coupler was previously made using coaxial wire that was trimmed and soldered with an extra outer braid layer to form a dipole antenna. This was not a repeatable process and caused a wide variation in performance. Therefore, it would be an improvement in the art to have a coupler design that is readily manufacturable and provides consistent performance.

Accordingly, it is an objective of the present invention to provide for an improved inductive coupler for use with an inductive charger system that is used to charge propulsion batteries of an electric vehicle. It is a further objective of the present invention to provide for an improved inductive coupler having a printed wiring board that forms a primary winding and antenna.

### SUMMARY OF THE INVENTION

To meet the above and other objectives, the present invention provides for an improved inductive coupler by combining an antenna and primary winding into a single structure that can be readily and consistently produced using conventional printed wiring board (PWB) manufacturing techniques. The primary winding and antenna are formed as part of a printed wiring board of the coupler. Consequently, the inductive coupler is less costly to produce and improves the overall performance of charging systems in which it is used.

The coupler, in conjunction with a charge port of the charging system, is medium by which electric power is transferred by means of inductive coupling. The shape of the coupler is esthetically pleasing and functional. The coupler is somewhat thicker that previously used designs. The coupler houses the printed wiring board which forms a primary winding and communication antenna, a magnet that is used to activate a switch in the mating charge port, and a ferrite puck that is visible from the outside of the coupler. The shape of the puck and primary winding gives the coupler its characteristic disc shape.

The shape of the coupler is a product of the functionality of its end use. The internal construction is different from previous coupler designs in that it utilizes the printed wiring board as the primary winding as opposed to more costly bussbar type folded turns and spiral pressed turns. A 915 MHz band carrier antenna is formed as part of the printed wiring board. Heretofore, a separate labor-intensive dipole antenna made from a coaxial cable was used. The printed wiring board meets safety requirements for insulation integrity, voltage spacing, and flame resistance. Early couplers were much thinner which did not provide adequate cooling needed for high power charging.

The present coupler design has been chosen as a standard interface for use in charging systems developed by the assignee of the present invention. It has a thicker cross section that can accommodate coupler designs within its envelope to provide charging capacities up to 130 KW of power or higher. In addition, the location of its grounding shield was improved by moving the termination of the outer grounding shield closer to the power leads of the primary winding which improved EMI compatibility.

The present invention is intended for use in inductive coupling transformers for Magnecharge™ electric vehicle charging systems manufactured by the assignee of the present invention. The Magnecharge electric vehicle charging system previously used a coupler design that was too thin to be used for higher charge rates and had a primary winding that was based on a pressed spiral copper configuration that was laminated with insulation. The present invention as implemented saves over $100 in material and labor costs over the previous coupler design.

The thicker coupler design allows heat exchangers to be installed in charger models used for higher power charging levels. A thin cross section heat exchanger causes pressure drops across the coupler that are too high to be practical. The thicker cross section is also compatible with lower charge rate charger models, that provide power output of 6.6 KW or less, which do not require a heat exchanger to cool the primary winding. In addition, there are tactile feel features on the side of the coupler that comprise conductive plastic strips at the base that contact copper fingers in the charge port to provide for EMI shielding. This is needed because the thicker coupler requires a larger slot width in the charge port, which can increase radiated emissions. The coupler also has features that couple it to a locking mechanism.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 is a block diagram that illustrates an inductive charging system employing an inductive coupler in accordance with the principles of the present invention that is used to charge propulsion batteries of an electric vehicle;
Fig. 2 is a perspective view of the inductive coupler in accordance with the present invention;
Fig. 3 is a side view of the inductive coupler of Fig. 2;
Fig. 4 is an exploded view of the inductive coupler of Fig. 2;
Figs. 5a-5g illustrate printed wiring board layers employed in the inductive coupler of Fig. 2; and
Fig. 6 illustrates how the layers of the printed wiring board are attached to each other to form a four-turn winding.

### DETAILED DESCRIPTION

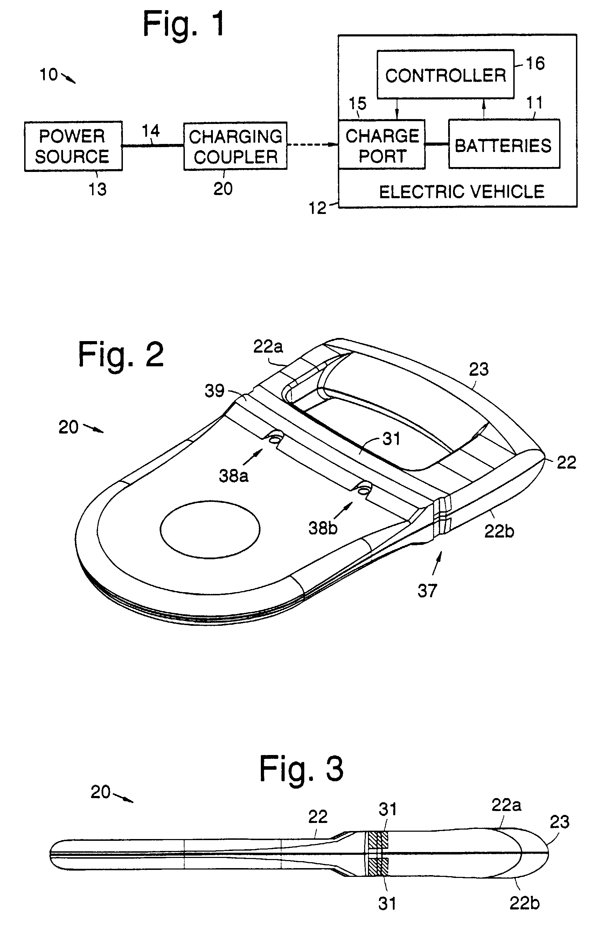

Referring to the drawing figures, Fig. 1 is a block diagram that illustrates an inductive charging system 10 employing an inductive charging coupler 20 or charge probe 20 in accordance with the principles of the present invention. The inductive charging system 10 is comprised of a power source 13 that is coupled by way of a power cable 14 to the inductive charging coupler 20. The inductive charging coupler 20 is designed to be inserted into a charge port 15 located in an electric vehicle 12 (indicated by the dashed arrow). The inductive charging coupler 20 comprises a primary of a transformer while the charge port 15 comprises the secondary thereof. Once the inductive charging coupler 20 is inserted into the charge port 15, power is transferred from the power source 13 to propulsion batteries 11 of the electric vehicle 12 under control of a controller 16.

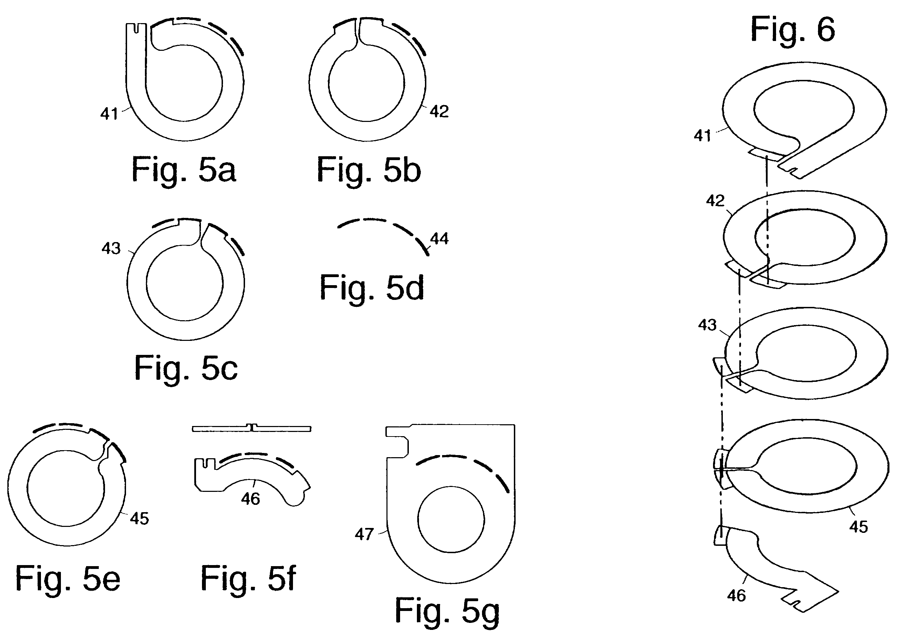

Figs. 2 and 3 show perspective, side and exploded views, respectively, of the inductive charging coupler 20. Figs. 2 and 3 also show the characteristic shape of the coupler 20. The inductive charging coupler 20 comprises a plastic coupler housing 22 that has two mating coupler halves 22a, 22b that are configured to provide a handle 23. The inductive charging coupler 20 has a center magnetic core 24 or "puck" 24, that may be comprised of ferrite, for example. A primary winding 25 is disposed around the center magnetic core 24 and is formed as a plurality of layers of a printed wiring board 40. Details of the printed wiring board 40 will be discussed with reference to Figs. 5 and 6. A charger cable 26, or other current carrying means 26, is coupled to the primary winding 25 and to the power source 13 for coupling energy to the charging coupler 20. The charging coupler 20 is designed to be inserted into an opening in the charge port 15 in order to couple power to the batteries 11 from the power source 13. A plurality of magnets 33 are provided that are used to activate a proximity switch (not shown) located in the charge port 15 that is used to provide an indication that the charge coupler 20 is properly inserted into the charge port 15. An antenna 35 is formed as an electrical trace on the printed wiring board 40. The antenna 35 is used to couple communications signals between control electronics in the charging system and electronics in the electric vehicle 12. The coupler 20 includes an opening 38a and a coupler stop 38b that are employed to lock it into the charge port 15.

The mating coupler halves 22a, 22b of the inductive charging coupler 20 enclose the primary winding 25 and the center magnetic core 24, and secures the charger cable 26 in the handle 23. The handle 23 includes a plurality of grounding clips 28 that engage outer shielding 29 of the charger cable 26. Conductive plastic strips 31 are disposed along an exterior portion of the coupler 20 between the handle 23 and the primary winding 25. The conductive plastic strips 31 engage metallized electromagnetic interference (EMI) fingers (not shown) on the charge port 15 when the coupler 20 is inserted into the charge port 15. A strain relief member 32 surrounds the charger cable 26 at a point where it exits the handle 23, and is secured by the two mating coupler halves 22a, 22b.

The coupler housing 22 may be made using an insertion molding process. First the conductive plastic strip 31 is molded and then inserted in the mold to make the entire coupler housing 22. The coupler 20 is made in two halves 22a, 22b that are bonded, ultrasonic welded, or hot plate welded together. The inside walls of the coupler halves 22a, 22b are metalized so the coupler 20 is completely shielded and can be connected internally to the shielded outer shielding 29 of the charger cable 26 and to the conductive plastic strip 31. The grounding clips 28 inside of the handle 23 make contact with the cable shielding 29 after the two coupler halves 22a, 22b are joined together by adhesive or ultrasonic welding methods. The conductive plastic strip 31 of the coupler 20 is then grounded to the outer braided 29. When the coupler 20 is inserted into the charge port 15 located in the vehicle, the conductive plastic strip 31 makes contact with the EMI fingers in the charge port 15. The fingers are attached to a chassis ground of the vehicle 12.

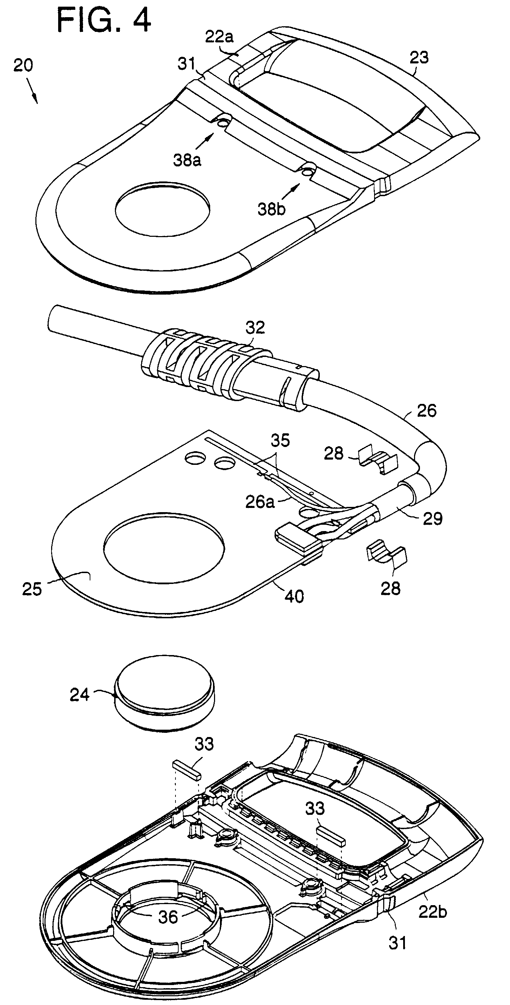

With specific reference to Fig. 4, it shows the internal assembly drawing of the inductive charging coupler 20. The primary winding 25 is in the form of a printed wiring board 40 and is attached to the charger cable 26 either by soldering or by screwing it down with lugs. A coaxial RF cable 26a that is part of the charger cable 26 is stripped and soldered to the antenna 35 which is part of the printed wiring board 40. The outer jacket of the charger cable 26 is stripped back to expose the outer braided shield 29. The shield 29 is sandwiched between two beryllium copper tabs that comprise the grounding clips 28 that dig into conductive fibers of the conductive plastic strips 31 which are insertion molded into the coupler 20. The ferrite puck 24 is held in the center of the coupler 20 with molded spring fingers 36 formed in the mating coupler halves 22a, 22b. The two magnets 33 disposed in the coupler 20 close the proximity switch in the charge port 15 upon insertion of the coupler 20 therein. The switch sends a signal to vehicle electronics that the coupler 20 has been inserted into the charge port 15.

The coupler 20 incorporates a number of features that are described with reference to other patents and patent applications of the present assignee. The coupler 20 employs the conductive plastic strips 31 for EMI shielding as is described in U.S. Patent No. 5,457,378 issued October 10, 1995, entitled "Electromagnetically Shielded Inductive Charging Apparatus", describing an inductive charging coupler according to the preamble of claim 1, tactile feel indents 37 as are described in U.S. Patent No. 5,506,489, issued Apnl 2, 1996 entitled "Inductive Coupler Having a Tactile Feel", and locking provisions comprising the opening 38a and coupler stop 38b as are described in later published U.S. Patent No. 5,711,558, entitled "Charger Locking Mechanism". The coupler has a thickness of 15.24 mm (0.600 inches) which has been chosen as a standard thickness for a standard mating charge port. U.S. Patent No. 5,434,493, filed July 18, 1995 entitled "Fixed Core Inductive Charger" describes a typical fixed inductive charge port 15 with which the present coupler 20 may be used. The coupler 20 also has a raised step 39 for the location of the conductive strip so EMI fingers inside the port 15 will not rub across the whole face of the coupler 20, which minimizes unnecessary wear.

Figs. 5a-5g illustrate artwork for layers 41-47 of the printed wiring board 40 employed in the inductive coupler 20 of Fig. 2. This type of artwork is also used for the secondary turns located in the charge port 15. Fig. 6 illustrates how the layers 41-47 of the printed wiring board 40 are attached to each other to form a four-turn primary winding 25. This process can be used to increase or decrease the number of turns simply by adding or deleting board layers.

Thus, an improved inductive coupler having a primary winding and an antenna integrated into a printed wiring board and which may be used with an inductive charger system that is used to charge propulsion batteries of an electric vehicle has been disclosed. It is to be understood that the above-described embodiment is merely illustrative of some of the many specific embodiments which represent applications of the principles of the present invention. Clearly, numerous and varied other arrangements may be readily devised by those skilled in the art without departing from the scope of the invention.

## Claims

1. An inductive charging coupler (20) for use with inductive charging apparatus (10) comprising a power source (13) and a charge port (15) disposed in an electric vehicle (12) that is coupled to a battery (11) of the electric vehicle, and wherein the coupler is insertable into the charge port to couple power from the power source to charge the battery of the electric vehicle, said coupler comprising:
a center magnetic core (24);
a primary winding (25) disposed around the center magnetic core;
a cable (26) coupled between the primary winding and the power source for coupling energy to the charging coupler;
a coupler housing (22) that has two mating coupler halves (22a,22b) that are configured to provide a handle (23), and wherein the mating coupler halves enclose the primary winding, secure the center magnetic core, and secure the cable in the handle;
characterised in that the primary winding (25) is formed from a plurality of printed circuit layers (41-47) of a printed wiring board (40), each layer having a predetermined printed circuit pattern, the printed wiring board (40) further comprising an antenna (35) formed as an electrical trace on a selected one of said printed circuit layers.

2. The coupler of Claim 1 further comprising a conductive plastic strip (31) disposed along an exterior portion of the coupler (20) that engages with the charge port (15) when the coupler is inserted therein to reduce electromagnetic interference.

3. The coupler of Claim 1 wherein the printed wiring board (40) further comprises a plurality of grounding clips (28) disposed in the handle (23) that engage outer shielding (29) of the cable (26).

4. The coupler of Claim 3 wherein the grounding clips (28) are comprised of tinned copper.

5. The coupler of Claim 1 wherein the center magnetic core (24) is comprised of ferrite.

6. The coupler of Claim 1 further comprising a strain relief member (32) surrounding the cable (26) at a point where it exits the handle (23), and that is secured by the two mating coupler halves (22a,22b).

7. The coupler of Claim 1 wherein the center magnetic core (24) is held in the coupler (20) with molded spring fingers (36) formed in the mating coupler halves (22a,22b).

## Patentansprüche

1. Induktivladekoppler (20) zur Verwendung mit einer Induktivladedose (10), umfassend eine Energiequelle (13) und einen Ladenport (15), der in einem Elektrofahrzeug (12) angeordnet ist und an eine Batterie (11) des Elektrofahrzeugs angekoppelt ist, und wobei der Koppler in den Ladeport eingesetzt werden kann, um Energie aus der Energiequelle anzukoppeln und somit die Batterie des Elektrofahrzeugs aufzuladen, wobei der Koppler umfaßt:
einen mittleren Magnetkern (24);
eine Primärwicklung (25), die um den mittleren Magnetkern herum angeordnet ist;
ein Kabel (26), das zwischen die Primärwicklung und die Energiequelle gekoppelt ist, um Energie an den Ladekoppler anzukoppeln;
ein Kopplergehäuse (22), das zwei zusammenpassende Kopplerhälften (22a, 22b) aufweist, die derart ausgestaltet sind, daß sie einen Griff (23) bereitstellen, und wobei die zusammenpassenden Kopplerhälften die Primärwicklung einschließen, den mittleren Magnetkern befestigen und das Kabel in dem Griff befestigen;
dadurch gekennzeichnet, daß die Primärwicklung (25) aus mehreren gedruckten Schaltkreisschichten (41-47) einer Leiterplatte (40) gebildet ist, wobei jede Schicht ein vorherbestimmtes gedrucktes Schaltkreismuster aufweist, wobei die Leiterplatte (40) ferner einer Antenne (35) umfaßt, die als eine elektrische Leiterbahn auf einer ausgewählten Schicht der gedruckten Schaltkreisschichten ausgebildet ist.

2. Koppler nach Anspruch 1, der ferner einen leitfähigen Kunststoffstreifen (31) umfaßt, der entlang eines äußeren Abschnitts des Kopplers (20) angeordnet ist und mit dem Ladeport (15) in Eingriff steht, wenn der Koppler in diesen eingesetzt ist, um elektromagnetische Interferenz zu verringern.

3. Koppler nach Anspruch 1, wobei die Leiterplatte (40) ferner mehrere Erdungsklemmen (28) umfaßt, die in dem Griff (23) angeordnet sind und mit einer äußeren Abschirmung (29) des Kabels (26) in Eingriff stehen.

4. Koppler nach Anspruch 3, wobei die Erdungsklemmen (28) aus verzinntem Kupfer bestehen.

5. Koppler nach Anspruch 1, wobei der mittlere Magnetkern (24) aus Ferrit besteht.

6. Koppler nach Anspruch 1, der ferner ein Zugentlastungselement (32) umfaßt, das das Kabel (26) an einer Stelle umgibt, an der es den Griff (23) verläßt, und das durch die beiden zusammenpassenden Kopplerhälften (22a, 22b) befestigt ist.

7. Koppler nach Anspruch 1, wobei der mittlere Magnetkern (24) in dem Koppler (20) mit eingeformten Federfingern (36) gehalten ist, die in den zusammenpassenden Kopplerhälften (22a, 22b) ausgebildet sind.

## Revendications

1. Coupleur inductif de charge (20) destiné à être utilisé avec un appareil inductif (10) de charge, comprenant une alimentation (13) et une voie (15) de charge disposées dans un véhicule électrique (12), et qui est couplé à une batterie (11) d'accumulateurs du véhicule électrique, et dans lequel le coupleur peut être inséré dans la voie de charge pour coupler l'énergie de l'alimentation afin qu'elle charge la batterie d'accumulateurs du véhicule électrique, le coupleur comprenant :
un noyau magnétique central (24),
un enroulement primaire (25) placé autour du noyau magnétique central,
un câble (26) couplé entre l'enroulement primaire et l'alimentation afin que l'énergie soit couplée au coupleur de charge,
un boîtier (22) de coupleur qui a deux moitiés complémentaires (22a, 22b) de coupleur ayant une configuration formant une poignée (23), et dans lequel les moitiés complémentaires du coupleur entourent l'enroulement primaire, fixent le noyau magnétique central et fixent le câble dans la poignée,
caractérisé en ce que l'enroulement primaire (25) est formé de plusieurs couches de circuit imprimé (41-47) d'une carte de circuit imprimé (40), chaque couche ayant un dessin prédéterminé de circuit imprimé, la carte (40) de circuit imprimé comprenant en outre une antenne (35) formée par une piste électrique sur une couche choisie parmi les couches de circuit imprimé.

2. Coupleur selon la revendication 1, comprenant en outre une bande (31) de matière plastique conductrice placée le long d'une partie extérieure du coupleur (20) qui est en coopération avec la voie de charge (15) lorsque le coupleur est inséré à l'intérieur pour la réduction des interférences électromagnétiques.

3. Coupleur selon la revendication 1, dans lequel la carte (40) de circuit imprimé comporte en outre plusieurs agrafes (28) de mise à la masse disposées dans la poignée (23) et qui coopèrent avec un blindage externe (29) du câble (26).

4. Coupleur selon la revendication 3, dans lequel les agrafes (28) de mise à la masse sont formées de cuivre étamé.

5. Coupleur selon la revendication 1, dans lequel le noyau magnétique central (24) est formé d'une ferrite.

6. Coupleur selon la revendication 1, comprenant en outre un organe (32) de relaxation de contrainte entourant le câble (26) à un emplacement auquel il sort de la poignée (23) et qui est fixé par les deux moitiés complémentaires (22a, 22b) du coupleur.

7. Coupleur selon la revendication 1, dans lequel le noyau magnétique central (24) est maintenu dans le coupleur (20) par des doigts élastiques moulés (36) formés dans les moitiés complémentaires (22a, 22b) du coupleur.
